# EUROPEAN PATENT APPLICATION

(11) **EP 4 190 969 A1**
(43) Date of publication of application: **07.06.2023**
(21) Application number: 21212478.8
(22) Date of filing: 06.12.2021
(51) Int. Cl.: D21H 11/18, C09C 1/36, D21H 11/20, D21H 17/67, D21H 17/69, D21H 17/00, D21H 27/10, D21H 27/26

(54) **COMPOSITE MATERIAL COMPRISED OF UNDRIED, COATED TITANIUM DIOXIDE PARTICLES AND NANOCELLULOSE**

(71) Applicant: Kronos International, Inc., 51373 Leverkusen (DE)
(72) Inventor: The designation of the inventor has not yet been filed

(57) **Abstract**

The invention relates to a composite material comprised of an undried, coated titanium dioxide pigment particle and nanocellulose. In addition, the present invention pertains to a method for obtaining said composite material, and to the composite material obtained by said method. Finally, the present invention relates to an aqueous slurry and the use of the aqueous slurry in the manufacture of paper, décor papers, corrugated cardboards, and packaging.

## Description

### Field Of The Invention

The invention relates to a composite material comprised of an undried, coated titanium dioxide pigment particle and nanocellulose. In addition, the present invention pertains to a method for obtaining said composite material, and to the composite material obtained by said method. Finally, the present invention relates to an aqueous slurry and the use of the aqueous slurry in the manufacture of paper, decor papers, corrugated cardboards, and packaging.

### Technological Background Of The Invention

In paper laminate applications, white or light-colored papers are required to exhibit a high opacity. Decor papers and decor foils are widely used in the production of decorative surfaces and are commonly comprised of a stack of papers which are impregnated and cured under pressure. The laminates do not serve merely as facing paper by hiding unattractive wood material surfaces but in addition as carrier for functional papers.

As white pigment, titanium dioxide is commonly used in high-end laminates. Titanium dioxide for these purposes is known in the art, for example, from EP 2 694 599 B1. They all have in common that a coating on the titanium dioxide is applied suitable for laminate applications which is filtered, washed and then dried at a temperature of more than 100 °C. The obtained titanium dioxide pigment imparts a white color to the laminate and provides the opacity necessary to hide the afore-mentioned unattractive wood substrate. To provide excellent hiding power, the pigments need to be ideally dispersed and thus deagglomerated. This agglomeration behavior in dispersion results mainly from large Hamaker constants of the particles.

In laminate applications, however, titanium dioxide pigment particles tend to agglomerate which imparts the hiding power. To compensate this mediocre hiding power, a higher amount of titanium dioxide pigment particles is employed which is economically detrimental given the fact that titanium dioxide is one of the most expensive components of a laminate.

In the field of packaging there is an increasing demand to replace environment unfriendly plastics by sustainable cellulose-based materials. Nanocellulose is of particular interest, as it imparts gas impermeability to packing which is beneficial for food packaging and can be provided as a foil coating. In this field, titanium dioxide is also the pigment of choice to hide unattractive brown or transparent material.

The titanium dioxide pigment is also provided in the form of a slurry. To disperse the pigment and provide a stable slurry, dispersing aids are commonly employed. Many effective dispersing agents are prohibited by health and environment regulations for various reasons.

Hence, there is a need in the art for titanium dioxide pigment particles which provide excellent and homogenous distribution on cellulose with a high retention which provides superior opacity and has superior dispersing features without the need for additional hazardous, non-sustainable and expensive dispersing agents.

### Object And Brief Description Of The Present Invention

It has been surprisingly found that composite material comprised of an undried, coated titanium dioxide pigment particle and nanocellulose possess excellent and homogenous distribution on cellulose with a high retention which provides superior opacity and has superior dispersing features without the need for additional hazardous, non-sustainable, and expensive dispersing agents. The undried, coated titanium dioxide pigment particle according to the invention is obtained by a method comprising the following steps: (i) providing an aqueous suspension of a titanium dioxide base pigment, and (ii) forming at least one coating on said titanium dioxide base pigment, the coating is selected from the group consisting of silica, alumina, zirconia and mixtures thereof to obtain the undried, coated titanium dioxide pigment particle.

The approach of the present invention is based on the interaction of the titanium dioxide particle's surface and the nanocellulose.

In general, titanium dioxide base material is manufactured according to the sulphate process or chloride process, both well-established in the art. To adapt the physical properties according to the requirements of the later application, the obtained base pigment is commonly subject to surface-treatment by applying at least one coating onto said base pigment. If necessary, said base pigment or the agglomerates thereof may be milled before or after using established methods in order to increase the proportion of the base pigment that is present as primary particles as opposed to agglomerates. A known surface-treatment coating is the deposition of an alumina coating which is applied as the last layer and provides improved dispersibility when used in coating applications. After applying the layers, the pigment is washed and filtered and then commonly dried with a temperature of at least 100 °C and optionally dry-milled. In these drying steps, water is evaporated and the number of molecules with chemical groups which can interact with water and/or hydroxyl-containing compounds such as nanocellulose, is reduced to a high extent. As a result, dried, coated titanium dioxide pigments particles are obtained.

Conventional coatings contain among them, inter alia, silica, alumina and zirconia, which are alternatively present as mixtures and/or may be doped with common dopants. In standard applications, the reduction of water and hydroxyl groups form the base or coated pigment particles is essential. For example, when the pigment is processed in a medium at elevated temperature, the pigment may release water thereby adversely affecting the product properties. In the production of polymers, water vapor can thus be formed in the extrusion step leading to undesired bubble formation in the resulting polymer product. Moisture in pigments for laminate applications together with oxygen an exposed to UV radiation greys undesirably the laminate.

The present invention dispenses with any drying step of the coated titanium dioxide particle with a temperature of at least 100 °C. The pigment particle of the present invention is an undried, coated titanium dioxide pigment particle with a coating as described herein. As a result of being an undried, coated particle, the coated pigment particle possesses significantly more chemical groups, among them, hydroxide groups and oxide hydroxide groups on the particle's surface which can interact with water and/or hydroxyl-containing compounds such as nanocellulose as opposed to a dried particle which are commonly used as a pigment.

Therefore, in a first aspect, the invention pertains to a composite material comprised of an undried, coated titanium dioxide pigment particle and nanocellulose, characterized in that the undried, coated titanium dioxide pigment particle is obtained by a method comprising the following steps:
(i) providing an aqueous suspension of a titanium dioxide base pigment, and
(ii) forming at least one coating on said titanium dioxide base pigment, the coating is selected from the group consisting of silica, alumina, zirconia and mixtures thereof to obtain the undried, coated titanium dioxide pigment particle.

In a second aspect, the invention refers to a method for obtaining a composite material comprised of an undried, coated titanium dioxide pigment particle and nanocellulose, the method comprises the following steps: (i) providing an aqueous slurry comprised of an undried, coated titanium dioxide pigment particle; (ii) providing an aqueous slurry comprised of nanocellulose; and (iii) mixing the aqueous slurry comprised of the undried, coated titanium dioxide pigment particle with the aqueous slurry comprised of nanocellulose to obtain a mixed aqueous slurry comprised of said composite.

In a further aspect, the invention pertains to a composite material obtainable by the method as described herein.

In yet another aspect, the invention refers to an aqueous slurry comprising the composite material as described herein.

In a final aspect, the invention is directed to the use of the composite material as disclosed herein or the aqueous slurry as described herein in a method for obtaining papers, decor papers, corrugated cardboards, and packaging.

Further advantageous embodiments are covered by the dependent claims.

### Brief Description Of The Figures

Fig. 1: Scanning electron micrograph of a nanocellulose prior to the mechanically fibrillation using a M-110 F Microfluidizer Processor with a 200 µm cell diameter.
Fig. 2: Scanning electron micrograph of a nanocellulose after the twelve cycles during which the nanocellulose was mechanically fibrillated using a M-110 F Microfluidizer Processor with a 200 µm cell diameter at pressures up to 2,578 bar.

### Description Of The Invention

These and further aspects, features and advantages of the invention become apparent to the skilled person from a study of the following detailed description and claims. Each feature from one aspect of the invention may also be used in any other aspect of the invention. Further, of course, the examples contained herein are intended to describe and illustrate the invention, but not to limit it, and in particular, the invention is not limited to such examples. Numerical ranges stated in the form "from x to y" include the values mentioned and those values that lie within the range of the respective measurement accuracy as known to the skilled person. If several preferred numerical ranges are stated in this form, of course, all the ranges formed by a combination of the different end points are also included.

All percentages stated in connection with the compositions herein described relate to percent by weight (wt.%) unless explicitly stated otherwise, respectively based on the mixture of composition in question.

"At least one" as used herein relates to one or more, i.e., 1, 2, 3, 4, 5, 6, 7, 8, 9 or more. With respect to a coating, for example, the value relates to the composite material and not to the absolute number of molecules in the composite material.

The composite material is comprised of an undried, coated titanium dioxide pigment particle and nanocellulose, characterized in that the undried, coated titanium dioxide pigment particle is obtained by a method comprising the following steps:
(i) providing an aqueous suspension of a titanium dioxide base pigment, and
(ii) forming at least one coating on said titanium dioxide base pigment, the coating is selected from the group consisting of silica, alumina, zirconia and mixtures thereof to obtain the undried, coated titanium dioxide pigment particle.

In step (i), an aqueous suspension of titanium dioxide base pigment is provided. "Titanium dioxide base pigment", as used herein, refers to titanium dioxide base pigments obtained by the sulphate or chloride process which are optionally milled, but have not been subject to any coating process or related treatment. Further, said base pigment may be present in the crystal structures of rutile, anatase or brookite, usually in the crystal structures of rutile or anatase. Rutile is particularly suitable as compared to anatase because of its lower photolytic catalytic activity. Preferably, said base pigment consists of at least 98 wt.%, preferably of at least 99 wt.% rutile referred to the total weight of said base pigment. Preferably, the base pigment is in the form of primary particles as opposed to agglomerates. "Primary particle", as used herein, relates to a particle which may form together with at least one other particle to form agglomerates and aggregates. This definition of primary particles also covers twins and multiple twins, which are known in the art and can be analyzed by, for example, TEM analysis. The concentration of the base pigment is well known in the art ranging from 150 g/l to 500 g/l, and is preferably 400 g/l. The suspension is obtained in known devices and can be stirred in order to obtain a homogeneous suspension.

To form the respective coating in step (ii), precursors known in the art can be used. To form a silica coating, any known silica precursor can be used such as sodium silicate, potassium silicate, and lithium silicate. Preferably, sodium silicate is used. By known methods and techniques, the silica coating can be applied. The addition of the precursor is preferably conducted under agitation, and at elevated temperature, if necessary. The precursor can be added to the suspension over a course of 5 minutes to 60 minutes, and preferably over the course of 30 minutes. The formed silica coating of the invention does not only comprise silica, but all compounds obtained by the coating step which are silicon hydroxide, silicon oxide hydroxide and water containing silica phases.

To form an alumina coating, any suitable alumina precursor can be used. Preferably, sodium aluminate, aluminum sulfate, aluminium nitrate or aluminium chloride are used as precursors, and the coating can be formed by known methods and techniques such as adding a base thereby adjusting the pH to above 9. The addition of the precursor is preferably conducted under agitation, and at elevated temperature, if necessary. The precursor can be added to the suspension over a course of 5 minutes to 60 minutes, and preferably over the course of 30 minutes. The obtained alumina layer of the invention does not only comprise alumina, but all compounds obtained by the coating step which are aluminum hydroxide, aluminum oxide hydroxide and water containing alumina phases.

To form a zirconia coating, any suitable zirconia precursor can be used. Preferably, zirconium oxychloride, zirconium sulfate and zirconium carboxylate are used as precursors, and the coating can be formed by using methods and techniques known in the art. The addition of the precursor is preferably conducted under agitation, and at elevated temperature, if necessary. The precursor can be added to the suspension over a course of 5 minutes to 60 minutes, and preferably over the course of 30 minutes. The obtained zirconia layer of the invention does not only comprise zirconia, but all compounds obtained by the coating step which are zirconium hydroxide, zirconium oxide hydroxide and water containing zirconium phases.

If a mixture of silica, alumina and zirconia coating is formed, the respective precursors can be used. Further, combinations of silica, alumina and zirconia coatings can be formed, either by forming a single coating that contain a mixture of two coating materials, either a uniform mixture or with varying gradients of each coating material, or by applying sequential coatings of separate coating materials. Various methods of forming each type of coating, mixed coatings and multiple coating layers are well known to those of skill in the art.

After formation of the at least one coating, the titanium dioxide pigment particle may be filtered by, for example, by means of a Moore filtration and washed.

First, step (i) is conducted before the at least one coating is formed in step (ii) to obtain the undried, coated titanium dioxide pigment particles.

After the formation of the coating, an organic compound, such as silanes, siloxanes, trimethylolpropane (TMP), trimethylolethane (TME), hexametaphosphate (HMP), etc. may be added to the undried, coated titanium dioxide pigment particle. By doing so the matrix compatibility, especially towards surface-active additives, can be improved. Those skilled in the art are aware of such methods.

Within the scope of the invention, the titanium dioxide pigment particle has a primary size such that it scatters the visible light is scatter, ideally to a high rate. The particle size is the mass-related median d50 (hereinafter: d50) of from 200 nm to 400 nm determined by disc centrifuge. Further, preferably particle sizes (both agglomerates and primary particle sizes) greater than 600 nm should be excluded to the greatest extent possible, and preferably completely excluded.

"Undried", as used herein, refers to a titanium dioxide pigment particles which were coated according to the present invention, but subsequent to the coating process were not subject to any drying process with a temperature exceeding 95 °C, preferably exceeding 80 °C, in particular not to an established drying process such as spray drying or any mechanical drying with a temperature exceeding 95 °C, preferably exceeding 80 °C.

Without wishing to be bond to a scientific theory, it is believed that the undried, coated pigment particle of the present invention possess significantly more chemical groups such as hydroxide groups and oxide hydroxide groups on the surface which are capable of forming hydrogen bonds with the aqueous medium and/or the employed nanocellulose as opposed to state of the art composite material comprised of nanocellulose and titanium dioxide the latter being dried after a coating was applied. This results in a higher interaction and a higher retention of the titanium dioxide. Employed in a suspension, a decreased settlement tendency can be observed which results in a prolonged shelf life. The need for high amounts of wetting and/or dispersing agents is also reduced.

In a preferred embodiment, a silica coating is formed on the base pigment, and on the silica coating an alumina coating is formed.

After the formation of the at least one coating is completed in step (ii), the undried, coated titanium dioxide pigment particle is preferably separated from the aqueous suspension and then washed.

Nanocellulose also known as microfibrillated cellulose (MFC) is a material made from cellulose fibers where the individual microfibrils have been partly or totally detached from each other. Methods for obtaining nanocellulose are known in the art. It can be obtained by mechanical treatment or treatment with various chemicals or enzymes or bacteria. Cellulose is comprised of glucose units which are linked to each other, mainly as a linear chain of glucose units. Nanocellulose is normally quite thin with a thickness of up to 20 nm and possess a length of between 100 nm to 10 µm or longer between 10 to 100 µm. The manufacture of nanocellulose is well known in the art, for example, in WO 2007/091942 or in the review of V. Thakur et al., "Recent advances in nanocellulose processing, functionalization and applications: a review" in Mater Adv; 2017; 2; 1872-1895. The disclosures of these documents are included herein by reference. The nanocellulose has preferably a high content of glucan, preferably at least 75 wt.%, more preferably at least 90 wt.% referred to the total weight of the nanocellulose. The molecular weight is in general of between 10,000 g/mol and 2,000,000 g/mol, or between 50,000 g/mol and 1,000,000 g/mol, preferably between 100,000 g/mol and 500,000 g/mol, even more preferably between 200,000 g/mol and 300,000 g/mol. Preferably, the nanocellulose with the afore-mentioned molecular weights is mechanically fibrillated before it is used to obtain the composite material according to the present invention.

In a preferred embodiment of the present invention, the titanium dioxide pigment particle is covalently bonded to the nanocellulose by at least one phosphate group and/or a carboxyl group, even more preferably at least one phosphate group. In addition to the hydroxyl bonds between the undried, coated titanium dioxide pigment particle and the nanocellulose, covalent bonds are formed which increase the bond strength.

When linked, aside from the last units at the end of the chain, each unit has three available hydroxyl groups which can be substituted by the at least one carboxyl group and/or the at least one phosphate group. Preferably, the degree of substitution of the hydroxyl groups of the nanocellulose by the at least one carboxyl group and/or the at least one phosphate group is between 0.01 to 1.0, preferably 0.02 to 0.5. The substitution degree of 3.0 is the maximum due to the three available hydroxy groups.

The substitution reactions are known in the art. To obtain a carboxyl group substituted nanocellulose also known as carboxymethylcellulose (CMC), nanocellulose can be brought to reaction with monochloroacetic acid in the presence of sodium hydroxide in an organic solvent. These and further procedures are known from, for example, G. Zhang et al. "Preparation and characterization of sodium carboxymethyl cellulose from cotton stalk using microwave heating" in J Chem Technol Biotechnol 2011; 86: 584 - 9; Q. Lin et al. "Protein adsorption behaviors of carboxymethylated bacterial cellulose membranes" in Int Biol Macromol 2015; 73: 264 - 9; H. Yan et al "Sorption of methylene blue by carboxymethyl cellulose and reuse process in a secondary sorption" in Colloids Surf A 2011; 380: 143 - 51. The disclosures of these documents are included herein by reference.

To obtain a phosphate group substituted nanocellulose, nanocellulose can be brought to reaction with phosphoric acid and urea. These and further procedures are known, for example, from V. Thakur et al., "Recent advances in nanocellulose processing, functionalization and applications: a review" in Mater Adv; 2017; 2; 1872-1895, in particular in section 1.4. The disclosure of this document is included herein by reference.

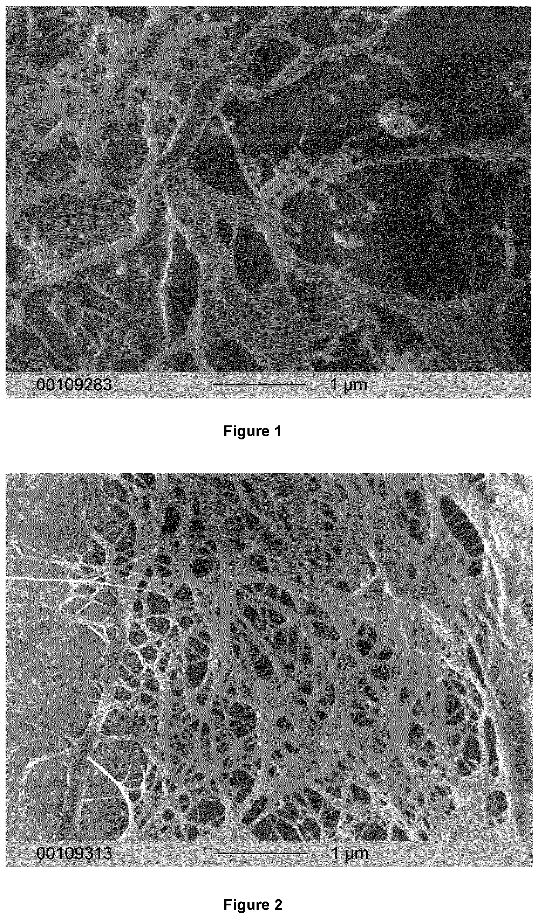

The composite according to the invention may comprise one cellulose fiber or more fibers such as 2, 3, 4 or more. These fibers may be interconnected as depicted in Figures 1 and 2.

In another preferred embodiment, the cellulose was obtained by mechanical treatment using shear forces. At least one cycle can be conducted. In a particularly preferred embodiment, the nanocellulose is mechanically treated twice, i. e., subsequent to the first treatment, the treated nanocellulose is treated for a second time. In another preferred embodiment, the nanocellulose is mechanically treated six times. In yet another preferred embodiment, the nanocellulose is mechanically treated twelve times. An image of this nanocellulose is shown in Figure 2.

Apparatuses which can used for this mechanical treatment are known in the art. They are optionally equipped with an inlet reservoir in which the aqueous nanocellulose dispersion can be filled. The reservoir is connected to a high-pressure pump pumping the aqueous nanocellulose dispersion through a 200 µm cell thereby a pressure of about 2500 bar is built. Such an apparatus is the M-110 F Microfluidizer Processor commercially available from Microfluidics in Westwood, Massachusetts, USA.

In a preferred embodiment, the nanocellulose is present as fibers. In this regard, the nanocellulose has a fiber shape with a width-length ratio of 1:2 to 1:50,000, preferably of 1:3 to 1:100. As already described herein, the nanocellulose is normally quite thin with a thickness of up to 20 nm and possess a length of between 100 nm to 10 µm or longer between 10 to 100 µm. The fibers may form net like structures as shown in Figures 1 and 2.

In a preferred embodiment of the present invention, the weight ratio of titanium dioxide and nanocellulose is between 10⁻⁶ to 1 and 10⁻¹ to 1, and more preferably between 10⁻⁴ to 1 and 3 × 10⁻² to 1.

In a further aspect the present invention pertains to a method obtaining a composite material comprised of an undried, coated titanium dioxide pigment particle and nanocellulose, the method comprises the following steps: (i) providing an aqueous slurry comprised of an undried, coated titanium dioxide pigment particle; (ii) providing an aqueous slurry comprised of nanocellulose; and (iii) mixing the aqueous slurry comprised of the undried, coated titanium dioxide pigment particle with the aqueous slurry comprised of nanocellulose to obtain a mixed aqueous slurry comprised of said composite. This ensures that hydrogen bonds between the nanocellulose and the particles are formed. The mixing is accomplished in known devices and can be stirred in order to obtain a homogeneous suspension.

Steps (i) to (iii) can be conducted by known methods and techniques, if necessary, at elevated temperature and under agitation. It is known that an aqueous slurry with 4.0 wt.% of nanocellulose based on the total weight of the slurry already possess a high viscosity and appears as a thick gel which makes it burdensome to further process it. Due to the viscosity, it is preferred to employ at most 4.0 wt.%, more preferred at most 2.0 wt.%, and even more preferred 1.0 wt.%.

In a preferred embodiment, the method further comprises the step (iv) in which an organic solvent to the mixed aqueous slurry is added to obtain the composite material. This ensures the formation of the covalent bond between the nanocellulose and the particles. The organic solvent used in step (iv) can be any organic solvent suitable for this purpose. Preferably, it is selected from the group of ethanol, methanol, propanol, butanol, acetone, aliphatic solvent lice acetone, and mixtures thereof. Without wishing to be bond to a specific theory, it is believed that the addition provokes the bond formation between the nanocellulose and the titanium dioxide. Alternatively, the composite material can be obtained by other means and methods than the addition by an organic solvent in step (iv), for example, by redox reaction, which is known to those skilled in the art.

In an optional step (v), the composite material is warmed thereby taking into consideration that the undried, coated titanium dioxide pigment particle is not subject to any drying process with a temperature exceeding 95 °C, preferably exceeding 80 °C, in particular not to an established drying process such as spray drying or any mechanical drying with a temperature exceeding 95 °C, preferably exceeding 80 °C.

In a further aspect, the present invention refers to a composite material obtainable by the method as described herein. The composite material is particularly preferred for the following reasons: In the decor paper market (laminate), titanium dioxide is easily washed off, e.g., compared to the distribution of titanium dioxide in foils, paints or varnishes. A higher retention of the used titanium dioxide pigment particles during paper production can be achieved leading to a more effective process and less waste material, which in turn contributes to a more sustainable material use. In addition, when the composite is employed in a food packaging, the barrier properties can be improved. As a result, the packaged food stays fresh longer.

In a yet further aspect, the invention pertains to an aqueous slurry which comprises the composite material as described herein. The slurry may comprise 0.5 wt.% to 40.0 wt.%, preferably 1.0 wt.% to 30.0 wt.%, more preferably 1.5 wt.% to 5.0 wt.%, and even more preferably 2.0 wt.% to 3.0 wt.% titanium dioxide pigment particles referred to the total weight of the slurry. Also, the composite according to the invention could optimize the production and service life of the aqueous slurry and renders another organic post-treatment of the pigment surface with, for example, polyalcohols or silicone oils superfluous. The slurry can be further used in the laminate manufacture.

The slurry can further comprise ingredients known in the art. The additives can be added by common techniques and methods. The viscosity modifier is preferably selected from the group consisting of glycerol, polyethers, such as polyethylene glycol and poly(ethylene oxide), cellulose polymers such as hydroxyethyl cellulose, hydroxypropyl cellulose and carboxymethyl cellulose, water-soluble acrylics, water-soluble polyesters, water-soluble polyurethanes, homopolymers of 2-ethyl-oxazoline, for example, poly-2-ethyl-2-oxazoline, polyvinyl alcohol and poly(vinylpyrrolidones) and mixtures thereof.

Preferred water-miscible organic solvents include d-6-alkanols, preferably methanol, ethanol, n-propanol, isopropanol, n-butanol, sec-butanol, tert-butanol, n-pentanol, cyclopentanol and cyclohexanol; linear amides, preferably dimethylformamide or dimethylacetamide; ketones and ketone-alcohols, preferably acetone, methyl ether ketone, cyclohexanone and diacetone alcohol; water-miscible ethers, preferably tetrahydrofuran and dioxane; diols, preferably diols having from 2 to 12 carbon atoms, for example pentane-1 ,5-diol, ethylene glycol, propylene glycol, butylene glycol, pentylene glycol, hexylene glycol and thiodiglycol and oligo- and poly-alkyleneglycols, preferably diethylene glycol, triethylene glycol, polyethylene glycol and polypropylene glycol; triols, preferably 1,2,6-hexanetriol; mono-Ci-4-alkyl ethers of diols, preferably mono-Ci-4-alkyl ethers of diols having 2 to 12 carbon atoms, especially 2-methoxyethanol, 2-(2-methoxyethoxy)ethanol, 2-(2-ethoxyethoxy)-ethanol, 2-[2-(2-methoxyethoxy)ethoxy]ethanol, 2-[2-(2-ethoxyethoxy)-ethoxy]-ethanol and ethylene glycol monoallyl ether; cyclic amides, preferably 2-pyrrolidone, N-methyl-2-pyrrolidone, N-ethyl-2-pyrrolidone, caprolactam and 1,3-dimethylimidazolidone; cyclic esters, preferably caprolactone; sulfoxides, preferably dimethyl sulfoxide; and sulfones.

Preferred water-miscible organic solvents are cyclic amides, especially 2-pyrrolidone, N-methyl-pyrrolidone and N-ethyl-pyrrolidone; diols, especially 1 ,5- pentane diol, ethylene glycol, diethylene glycol and triethylene glycol; and mono-Ci-4-alkyl and Ci-4-alkyl ethers of diols, more preferably mono-Ci-4-alkyl ethers of diols having 2 to 12 carbon atoms, especially 2-methoxy-2-ethoxy-2-ethoxyethanol.

Especially preferred solvents include 2-pyrrolidone, ethylene glycol, propylene glycol and diethylene glycol.

Further, surfactants can be employed and may be ionic or, more preferably, non-ionic. Acetylenic surfactants, fluoro surfactants and silicon surfactants are preferred. Examples of fluoro surfactants include Zonyl^{®} and Capstone^{®} grades from DuPont, e.g. Zonyl^{®} FSO, FSN and FSA and short-chain perfluoro-based anionic fluorosurfactants such as Chemguard S-103A available from Chemguard. Acetylene surfactants are more preferred especially 2,4,7,9-tetramethyl-5-decyne- 4,7-diol and ethylene oxide condensates thereof, for example Surfynol^{®} and Dynol^{®} surfactants available from Air Products. The ethylene oxide condensates of 2,4,7,9-tetramethyl-5-decyne-4,7-diol are particularly preferred. Mixtures containing different surfactants may be used. Mixed surfactants may be of the same type e.g., two non-ionic surfactants or be of different types e.g., an ionic and non-ionic surfactant.

The biocide which can also be a mixture of biocides can be used. It is preferred that the biocide comprises 1,2- benzisothazolin-3-one which is commercially available as an active solution from Lonza as Proxel^{®} GXL and Bioban^{®}, DXN (2,6-dimethyl-1 ,3-dioxan-4-yl acetate), from Dow Chemical Company, or Preventol P 91^{®} from Lanxess which is a reaction product of 5-chloro-2-methyl-2H-isothiazole-2-one and 2-methyl-2H-isothiazole-3-one. Also preferred are lithium and/or zinc-based biocides.

In a final aspect, the present invention is directed to the use of the composite material, or the aqueous slurry as described in a method for obtaining papers, decor papers, corrugated cardboards, and packaging.

### Test Methods And Test Results

### Particle size distribution and mass-related median d50

The particle size distribution and the mass-related median d50 were determined by laser diffraction using a Mastersizer 2000 from the company Malvern. For the measurement, a suspension of Calgon solution (80 ml, 0.06% in distilled water) was dispersed with the particle material to be examined (2 g) for 60 seconds using an Ultraturrax stirrer at 9500 rpm.

The measurement was performed with the following appliance settings:
Refractive index (n), medium (water): 1.33
Refractive index (n), titanium dioxide (rutile): 2.741 (in red laser) and 2.960 (in blue light).
Refractive index (n), titanium dioxide (anatase): 2.550 (in red laser) and 2.500 (in blue light).
Absorption index (k), titanium dioxide (rutile): 0.08 (in red laser) and 0.08 (in blue light).
Absorption index (k), titanium dioxide (anatase): 0.07 (in red laser) and 0.08 (in blue light).
Laser shading: 0.8 %.
Wavelength of the light sources: red: 633 nm; blue: 466 nm.

## Claims

1. Composite material comprised of an undried, coated titanium dioxide pigment particle and nanocellulose, **characterized in that**
the undried, coated titanium dioxide pigment particle is obtained by a method comprising the following steps:
(i) providing an aqueous suspension of a titanium dioxide base pigment, and
(ii) forming at least one coating on said titanium dioxide base pigment, the coating is selected from the group consisting of silica, alumina, zirconia and mixtures thereof to obtain the undried, coated titanium dioxide pigment particle.

2. Composite material comprised of an undried, coated titanium dioxide pigment particle obtainable by a method according to claim 1, **characterized in that**
a silica coating is formed on the base pigment, and on the silica coating an alumina coating is formed.

3. Composite material comprised of an undried, coated titanium dioxide pigment particle obtainable by a method according to claim 1 or 2 further comprising the steps of
(iii) separating the undried, coated titanium dioxide pigment particle from the aqueous suspension and washing the undried, coated titanium dioxide pigment particle from the aqueous suspension.

4. The composite material according to any one of claims 1 to 3, **characterized in that** the undried, coated titanium dioxide pigment particle is covalently bonded to the nanocellulose by at least one carboxyl group and/or at least one phosphate group.

5. The composite material according to claim 4, **characterized in that** the undried, coated titanium dioxide pigment particle is covalently bonded to the nanocellulose by at least one phosphate group.

6. The composite material according to any one of claims 1 to 5, **characterized in that** the degree of substitution of the hydroxyl groups of the nanocellulose by the at least one carboxyl group and/or the at least one phosphate group is between 0.01 to 1.0, preferably 0.02 to 0.5.

7. The composite material according to any one of claims 1 to 6, **characterized in that** the nanocellulose is present as fibers.

8. The composite material according to any one of claims 1 to 7, **characterized in that** the weight ratio of undried, coated titanium dioxide and nanocellulose is between 10⁻⁶ to 1 and 10⁻¹ to 1, and more preferably between 10⁻⁴ to 1 and 3 × 10⁻² to 1.

9. The composite material according to any one of claims 1 to 8, **characterized in that** the nanocellulose was obtained by mechanical treatment.

10. Method for obtaining a composite material comprised of an undried, coated titanium dioxide pigment particle and nanocellulose, the method comprises the following steps:
(i) providing an aqueous slurry comprised of an undried, coated titanium dioxide pigment particle;
(ii) providing an aqueous slurry comprised of nanocellulose; and
(iii) mixing the aqueous slurry comprised of the undried, coated titanium dioxide pigment particle with the aqueous slurry comprised of nanocellulose to obtain a mixed aqueous slurry comprised of said composite.

11. Method for obtaining a composite material comprised of an undried, coated titanium dioxide pigment particle and nanocellulose, the method further comprises the following step: (iv) adding an organic solvent to the mixed aqueous slurry to obtain the composite material.

12. Composite material obtainable by the method of claim 10 or 11.

13. Aqueous slurry comprising the composite material according to one of the claims 1 to 9 and 12.

14. Use of the composite material according to claims 1 to 9 and 12 or the aqueous slurry according to claim 12 in a method for obtaining papers, decor papers, corrugated cardboards, and packaging.
